Europäisches Patentamt

European Patent Office

Office européen des brevets

(11) Veröffentlichungsnummer: **0 007 320**
A1

(12) # EUROPÄISCHE PATENTANMELDUNG

(21) Anmeldenummer: 78100513.7

(22) Anmeldetag: 26.07.78

(51) Int. Cl.³: **A 01 K 31/22**
**B 65 G 17/08, A 01 K 45/00**
**E 04 H 5/08**

(43) Veröffentlichungstag der Anmeldung:
06.02.80 Patentblatt 80.3

(84) Benannte Vertragsstaaten:
BE CH FR GB NL SE

(71) Anmelder: Nagel, Hans-Joachim, Dr.
Contrescarpe 72
D-2800 Bremen(DE)

(72) Erfinder: Nagel, Hans-Joachim,. Dr.
Contrescarpe 72
D-2800 Bremen(DE)

(72) Erfinder: Schumacher, Egon
Landeshuter Strasse
D-2847 Barnstorf(DE)

(74) Vertreter: Meissner & Bolte Patentanwälte
Slevogtstrasse 21
D-2800 Bremen(DE)

(54) Einrichtung für die Haltung von Mastgeflügel in Stallungen.

(57) Der Mastgeflügelstall ist in einem verstellbaren Abstand oberhalb des eigentlichen Stallbodens (10) mit einem weiteren Gitterboden (11) versehen auf dem die Tiere sich aufhalten und der als umlaufender Endlosförderer ausgebildet ist. Der Boden (11) ist in einzelne Bahnen (15a)(15b)(15c) unterteilt. Die Transportbewegung des Bodens (Pfeil 16) läuft zu einem Querförderer (17) der an einem Rand des Bodens angeordnet ist und zu einer Öffnung (19) in der Stallwand führt.

./...

EP 0 007 320 A1

*Fig. 2*

## Einrichtung für die Haltung von Mastgeflügel in Stallungen

Die Erfindung betrifft eine Einrichtung mit einem Boden für die Haltung von Kleintieren, insbesondere Mastgeflügel, wie Hähnchen in Stallungen oder dergl., mit Fütterungs- und Tränkeeinrichtungen.

Während Legehennen für die Eierproduktion vorwiegend in sog. Lege-Batterien, also in Käfigen, gehalten werden, ist es üblich, bei der Geflügelaufzucht die Tiere in großflächigen Stallungen auf einem durchgehenden Boden zu halten. Dieser ist vielfach mit einem Abstand oberhalb des eigentlichen Stallbodens angeordnet. Der (Geflügel-)Boden ist mit Durchbrechungen, Löchern oder dergl. versehen, die das Durchfallen von Kot und sonstigen Verunreinigungen auf den tieferliegenden Stallboden ermöglichen.

Ein Problem bei dieser Bodenhaltung von Mastgeflügel ist das Ausstallen der Tiere nach Beendigung der Aufzucht. Die Tiere sind während dieser Phase weitgehend inaktiv und insbesondere nicht bereit, durch eigene Bewegung den Stall zu verlassen.

Der Erfindung liegt die Aufgabe zugrunde, eine Einrichtung für die Bodenhaltung von insbesondere Masthähnchen (Broiler) vorzuschlagen, die im Aufbau und in der Unterhaltung einfach ist, dennoch aber eine sehr rationelle und wenig zeitaufwendige Entstallung der Tiere ermöglicht.

Zur Lösung dieser Aufgabe ist die erfindungsgemäße Einrichtung dadurch gekennzeichnet, daß der Boden zugleich als Förderer ausgebildet und insgesamt oder teilweise in seiner Ebene bewegbar ist.

Bei der Erfindung wird demnach der gitterartig ausgebildete Boden mit den darauf sitzenden bzw. stehenden Tieren als Transporteinrichtung bewegt, und zwar zum Rand der Stallung. Dort werden die Tiere von dem Boden an einen Abförderer übergeben, insbesondere an einen quer zur Förderrichtung des Bodens verlaufenden Querförderer. Durch diesen werden die Tiere dann aus dem Stall abtransportiert.

Durch die vorstehende Förderbewegung des Bodens über die gesamte Breite der Stallung werden innerhalb verhältnismäßig kurzer Zeit alle Tiere zuverlässig abtransportiert. Zur Sicherheit kann am Transportende des Bodens ein quer zur Förderrichtung verlaufendes Fanggitter auf dem Boden angebracht sein, welches verhindert, daß die Tiere den wandernden Boden verlassen.

Vorzugsweise ist der Boden wie ein endloses, umlaufendes Förderorgan ausgebildet, und zwar bestehend aus mehreren nebeneinander liegenden Bahnen, die gemeinsam bewegt werden. An den Enden, also am Querförderer einerseits und auf der gegenüberliegenden Seite andererseits, läuft der biegbare Boden über Umlenkwalzen, von denen eine motorisch angetrieben ist. Der Boden ist zu diesem Zweck in besonderer Weise aus einzelnen Gliedern zusammengesetzt, die eine Umlenkung im Bereich der Umlenkwalzen ermöglichen.

0007320

Alternativ kann der Boden auch aus einzelnen, plattenförmigen Bodenelementen bestehen, die miteinander verbunden als Transportmittel
bewegt werden und im Bereich der Abgabeseite der Tiere durch eine
schlitzförmige Öffnung einer Wand, z. B. Stallwand, hindurchlaufen.

Weitere Einzelheiten und Vorteile der Erfindung werden nachfolgend
anhand der Zeichnungen näher erläutert. Es zeigen:

Fig. 1     einen Querschnitt durch einen im Sinne der Erfindung
           ausgebildeten Stall, stark vereinfacht,

Fig. 2     den erfindungsgemäßen Boden in einem Ausschnitt bei
           perspektivischer Darstellung,

Fig. 3     einen Querschnitt durch einen Teil des Bodens in vergrößertem Maßstab,

Fig. 4     einen Teil des Bodens im Grundriß bzw. in Draufsicht,

Fig. 5     einen Querschnitt durch den Boden mit einer Umlenkwalze im Bereich der Umlenkung,

Fig. 6     die Umlenkwalze gemäß Fig. 5 im Grundriß,

Fig. 7     eine Ausführung der Erfindung mit einzelnen plattenförmigen Bodenelementen in perspektivischer Darstellung
           entsprechend Fig. 2,

Fig. 8     einen Querschnitt durch den Boden bei der Ausführungsform gemäß Fig. 7 in vergrößertem Maßstab.

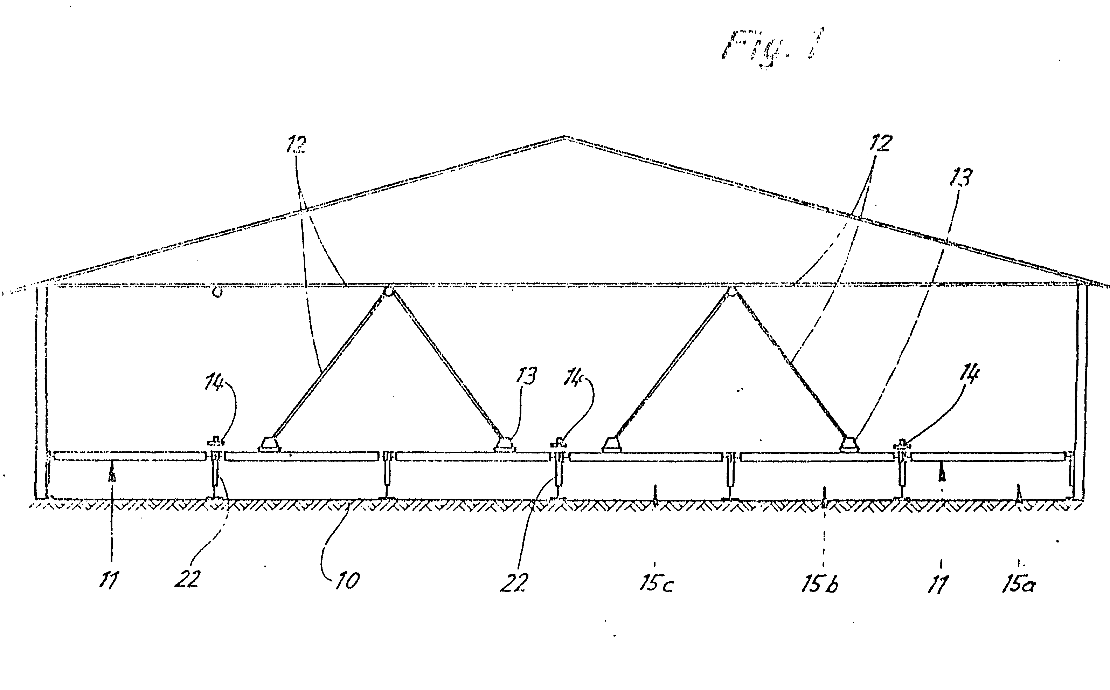

In Fig. 1 ist im schematischen Querschnitt eine Stallung zur Aufnahme
von beispielsweise Aufzuchthähnchen dargestellt. Innerhalb der Stallung ist oberhalb eines Stallbodens 10 und mit Abstand von diesem ein (weiterer) Boden 11 angeordnet. Dieser bildet die Lauf- bzw. Standfläche für die Tiere. Oberhalb dieses Bodens 11 ist ein System von Rohren 12 für die Versorgung von Futtergeräten 13 vorgesehen. Darüber hinaus erstrecken sich ebenfalls oberhalb des Bodens 11 gesonderte Tränkeeinrichtungen 14.

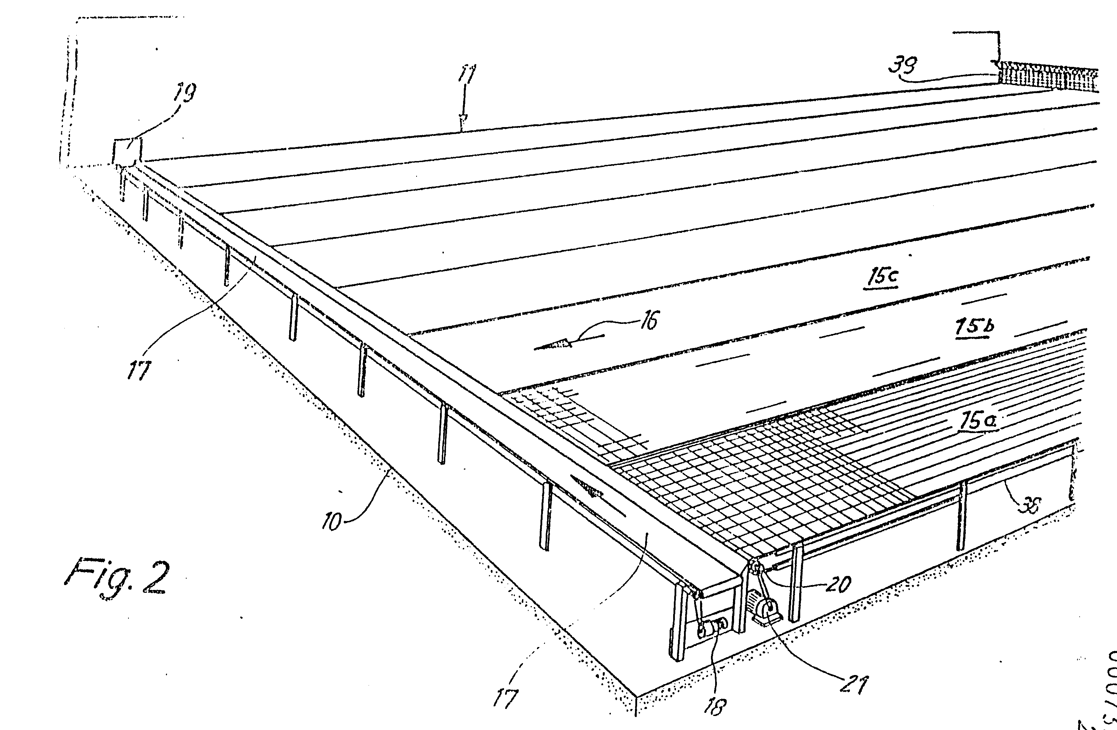

Der Boden 11 ist insgesamt als Förderer für die Tiere ausgebildet. Dies bedeutet, daß der Boden 11 über die volle Breite der Stallung gesehen in der Ebene des Bodens 11 bewegbar ist. Zu diesem Zweck ist der Boden 11 in einzelne Bahnen 15a, 15b, 15c.. unterteilt. Diese werden zweckmäßigerweise gemeinsam und gleichzeitig in Förderrichtung (Pfeil 16 in Fig. 2) bewegt.

Die Transportbewegung der Bahnen 15a, 15b.. läuft bei den vorliegenden Ausführungsbeispielen zu einem Querförderer 17, der hier am Rand der Stallung angeordnet ist. Die Tiere werden durch die entsprechende Bewegung des Bodens 11 dem Querförderer 17 zugeführt und auf diesem abgesetzt. Der Querförderer 17 ist zu diesem Zweck etwas niedriger angeordnet als der Boden 11. Der Querförderer 17 wird im übrigen durch einen Motor 18 in Richtung quer zur Förderrichtung (Pfeil 16) des Bodens 11 angetrieben. Die Tiere werden beispielsweise durch eine Öffnung 19 in der Stallwand abtransportiert.

Bei dem bevorzugten Ausführungsbeispiel der Fig. 2 bis 6 ist der Boden 11 bzw. sind dessen Bahnen 15a, 15b wie endlose Transportbänder ausgebildet. Die flexiblen bzw. verformbaren Bahnen 15a, 15b laufen zu diesem Zweck an den Enden über Umlenkwalzen. In den Zeichnungen ist hiervon die dem Querförderer 17 zugekehrte Umlenkwalze 20 gezeigt, die zugleich Triebwalze ist für die Übertragung des Förderantriebs auf die Bahnen 15a, 15b.. Die Umlenkwalze 20 wird zu diesem Zweck durch einen Motor 21 über beispielsweise einen Ketten- oder Riementrieb angetrieben.

0007320

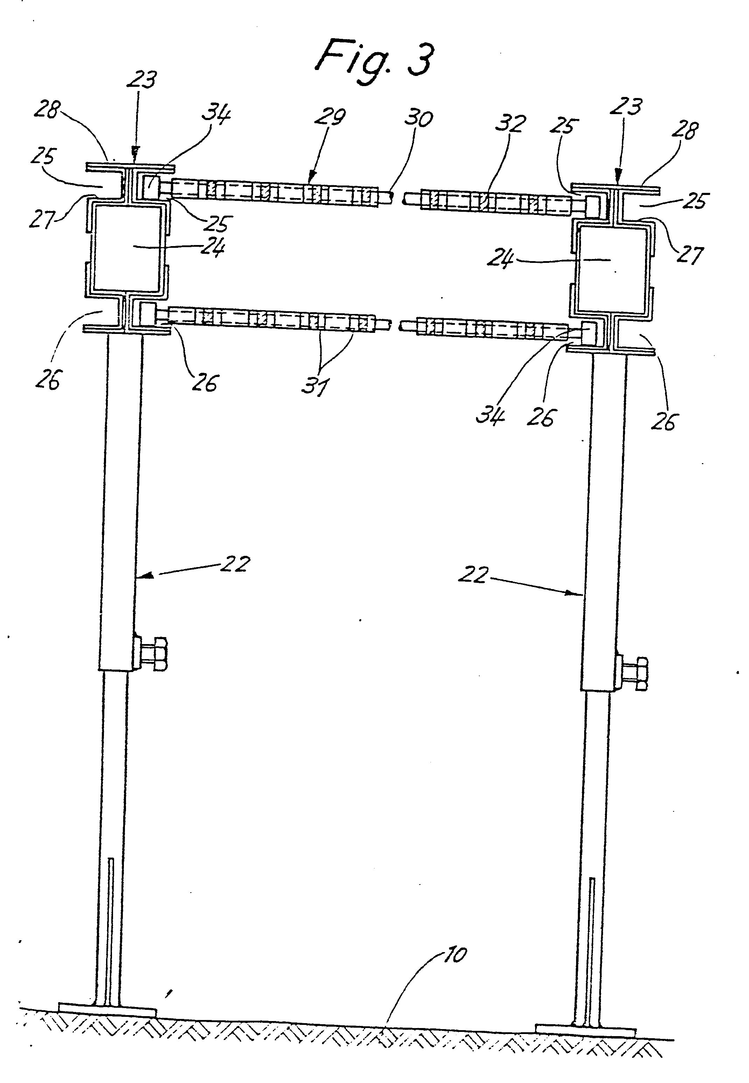

Der Boden 11 bzw. dessen Bahnen 15a, 15b.. sind auf höhenverstellbaren, als Teleskop ausgebildeten Stützen 22 gelagert, die auf dem Stallboden 10 ruhen. Auf dem oberen Ende derselben liegen in Bewegungsrichtung der Bahnen 15a.. verlaufende Stützprofile 23 auf. Diese bestehen gem. Fig.3 aus einem durchgehenden Hohlkasten 24, der im wesentlichen tragende Funktion hat. An Oberseite und Unterseite desselben sind jeweils zwei Führungsschienen 25, 26 angeordnet, die hier U-förmig ausgebildet und mit der offenen Seite der Bahn 15a, 15b.. zugekehrt sind. In die oberen Führungsschienen 25 tritt der obere Trum der Bahn 15a, 15b.. ein, und zwar unter Auflage auf einem unteren Flansch 27. Ein oberer, durchgehender Flansch 28 sorgt für eine Abdeckung des Zwischenraums zwischen benachbarten Bahnen 15a, 15b...

Die Bahnen 15a, 15b.. bestehen hier aus in Längsrichtung verlaufenden Gliedern 29. Diese sind schwenkbar auf quer zur Förderrichtung verlaufenden Querstangen 30 gelagert. Die Glieder 29 sind zu diesem Zweck etwa doppel-T-förmig ausgebildet. Mit entsprechend breiteren Naben 31 sitzen sie in Dichtlage drehbar bzw. schwenkbar auf den Querstangen 30, derart, daß schmalere, in Transportrichtung sich erstreckende, verbindende Stege 32 jeweils "auf Lücke" angeordnet sind. Es entstehen dadurch im Bereich zwischen den Querstangen 30 rechteckige bzw. quadratische Ausnehmungen 33 für den Durchtritt von Kot und sonstigen Verunreinigungen. Die Glieder 29 können aus Kunststoff oder aus anderen geeigneten, widerstandsfähigen und vorzugsweise zugfesten Werkstoffen bestehen. Die Ausnehmungen 33 können beispielsweise eine Länge von 25 mm und eine Breite von 18 mm haben bei einem Durchmesser der Querstangen 30 von etwa 10 mm.

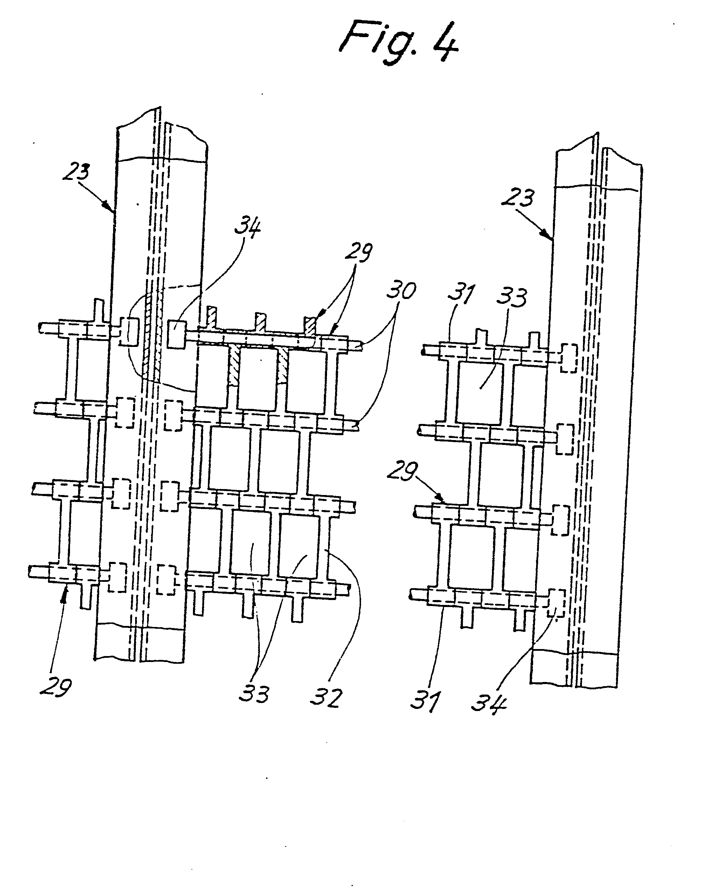

Die Enden der Querstangen 30 treten in die Führungsschienen 25 ein. Bei dem Ausführungsbeispiel der Fig. 4 ist zu diesem Zweck auf jedem Ende der Querstangen 30 ein Gleitkörper 34, z. B. aus Kunststoff, angeordnet. Alternativ können die Querstangen 30 auch mit Laufrollen versehen sein.

Durch die drehbare Lagerung der Glieder 29 auf den Querstangen 30 sind die Bahnen 15a, 15b um die Umlenkwalzen 20 herumführbar. Diese sind zu diesem Zweck mit einem passenden Profil ausgebildet, derart, daß die Bahnen 15a, 15b formschlüssig erfaßt werden. Dadurch kann die für den Antrieb erforderliche Zugkraft unmittelbar in die Bahn 15a.. eingeleitet werden.

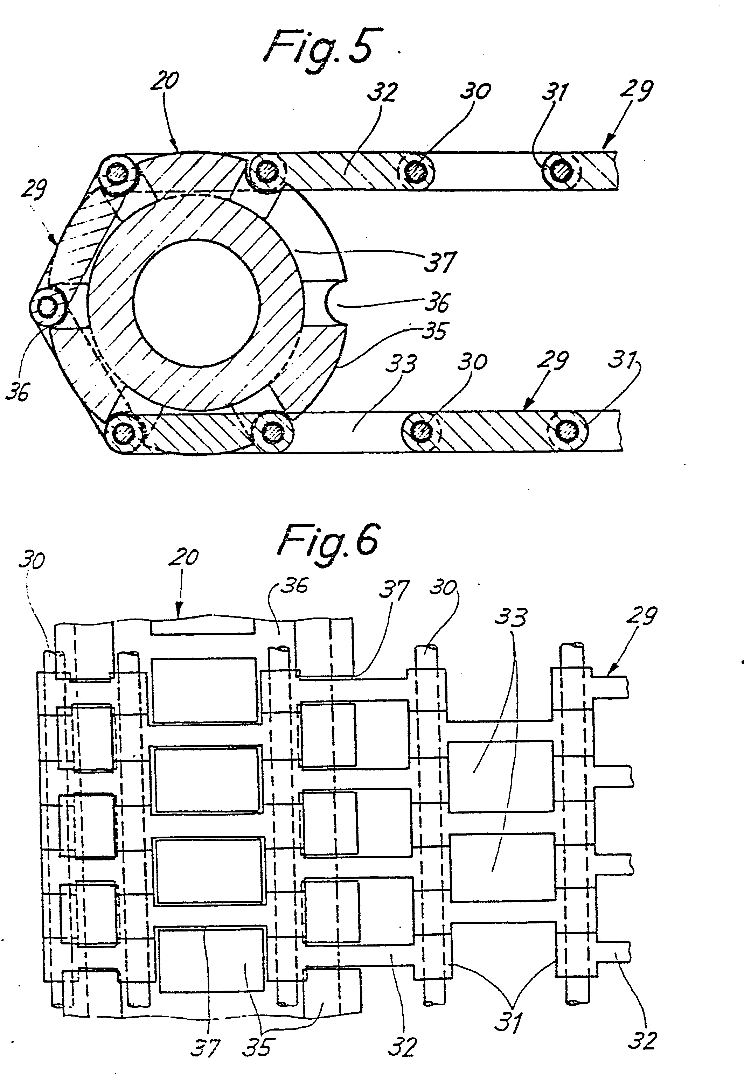

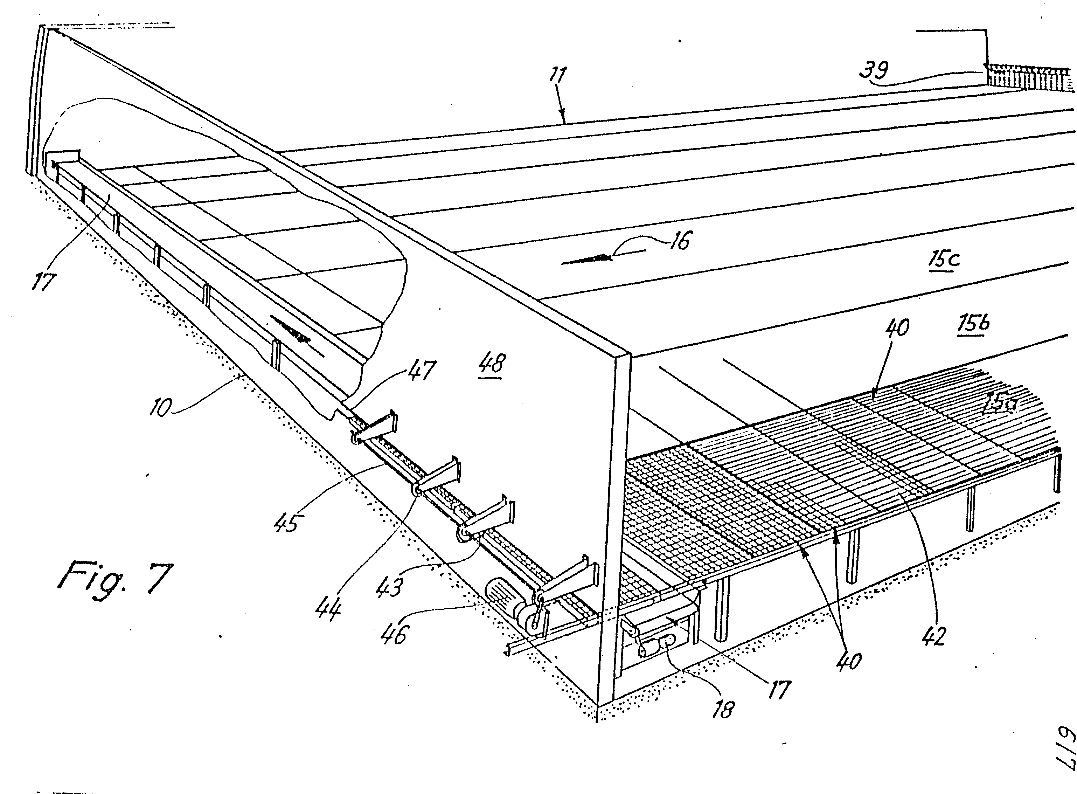

Wie aus Fig. 5 und 6 ersichtlich, sind zu diesem Zweck auf der Umlenkwalze 20 Erhöhungen 35 gebildet, die passend in die Ausnehmungen 33 eintreten. Axial verlaufende Rillen 36 dienen zur Aufnahme jeweils der Querstangen 30. Des weiteren sind hier im Umfangsrichtung verlaufende Nuten 37 angeordnet. In diese legen sich die Stege 32 der Glieder 29.

Die Bahnen 15a, 15b sind bei dem vorliegenden Ausführungsbeispiel auch insoweit besonders gestaltet, als lediglich der obere Trum als Boden 11 für die Tiere ausgebildet ist, nämlich gitterartig. Der untere Trum besteht hier lediglich aus Zugorganen, nämlich seitlichen Zugseilen 38, die im Bereich der Führungsschienen 25 bzw. 26 an den Obertrum der Bahn anschließen. Dies kann durch einfache Verbindung mit einer oder mehreren Querstangen 30 erfolgen. Der Vorteil dieser Maßnahme ist ein geringerer Materialaufwand. Außerdem wird dadurch während der Transportbewegung des Bodens 11 der Stallboden 10 in einem größeren Teil frei, so daß hier Reinigungsarbeiten ausgeführt werden können.

Die Bahnen 15a, 15b können alternativ auch so ausgebildet sein, daß die Zugkräfte über seitliche Zugorgane, z. B. Ketten, übertragen werden. In diesem Falle sind die Querstangen 30 mit entsprechenden Ketten verbunden. Zwischen den Querstangen 30 bedarf es dann keiner zugfesten Glieder, sondern es können hier einfachere und weniger aufwendige Abdeckungen, z. B. perforierte Matten, angeordnet sein.

0007320

Um bei der Abförderung der Tiere zu vermeiden, daß diese an dem zum Querförderer 17 gegenüberliegenden Ende den Boden 11 verlassen, ist hier eine quergerichtete Mitnehmereinrichtung in Gestalt eines Fanggitters 39 auf den Boden 11 aufgesetzt. Dieses Fanggitter 39 wandert mit dem Boden 11 bis etwa zum Querförderer 17.

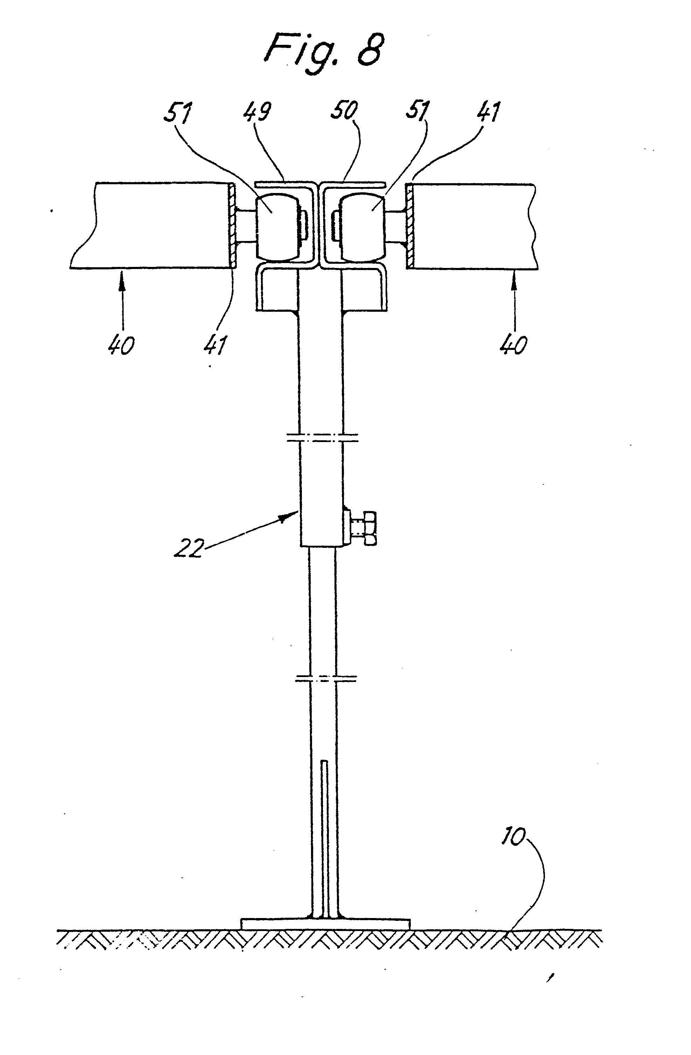

Eine Alternative für die Ausgestaltung der Bahnen 15a, 15b.. ist in Fig. 7 und 8 dargestellt. Hier sind einzelne mehr oder weniger starre, plattenförmige Bodenelemente 40 in einer Bahn 15a, 15b.. aufeinanderfolgend in Dichtlage angeordnet. Die Bodenelemente 40 bestehen beispielsweise aus einem geschlossenen Rahmen 41, in dem ein Gitter 42, eine perforierte Matte oder dergl. gespannt ist.

Die Bodenelemente 40 werden für die Entstallung der Tiere ebenfalls in Richtung auf einen Querförderer 17 bewegt. Zu diesem Zweck können die Bodenelemente 40 durch ein durchlaufendes Zugseil 43 aneinandergekuppelt sein. Die Zugseile 43 laufen über Antriebsrollen 44, die ihrerseits auf einer gemeinsamen Welle 45 gelagert sind und durch einen Motor 46 angetrieben werden.

Die so bewegten Bodenelemente 40 treten nacheinander durch einen spaltartigen Durchbruch 47 in einer Wand, nämlich in der Stallwand 48, hindurch. Der Durchbruch 47 ist dabei in der Höhe so bemessen, daß die Tiere auf der Innenseite der Stallung vor der Stallwand 48 zurückgehalten werden und dadurch auf den Querförderer 17 gelangen. Die aus der Stallung auf diese Weise austretenden Bodenelemente 40 werden außen nacheinander abgenommen und nach Entleerung der Stallung wieder eingeführt.

Die Bodenelemente 40 sind ebenfalls in nebeneinanderliegenden Führungsschienen 49, 50 geführt. Es handelt sich auch hier um U-förmige Profile, die zu den Bodenelementen 40 hin offen sind. Diese treten mit Laufrollen 51 in die Führungsschienen 49 und 50 ein. Die Laufrollen 51 sind am Rahmen 41 befestigt.

- 8 -

Anmelder:

Dr. Hans-Joachim Nage.

Bremen, den 26. Juni 1978
9112

Patentansprüche:

1.      Einrichtung mit einem Boden für die Haltung von Kleintieren, insbesondere Mast-Geflügel, wie Hähnchen, in Stallungen oder dergl. mit Fütterungs- und Tränkeeinrichtungen, dadurch gekennzeichnet, daß der Boden (11) zugleich als Förderer ausgebildet und insgesamt oder teilweise in seiner Ebene bewegbar ist.

2.      Einrichtung nach Anspruch 1, dadurch gekennzeichnet, daß der Boden (11) zu einem sich in der Stallung oder außerhalb derselben erstreckenden, quer zur Bewegungsrichtung des Bodens (11) verlaufenden Querförderer (17) bewegbar ist, derart, daß die durch den Boden (11) transportierten Kleintiere an den Querförderer (17) übergeben werden.

3.      Einrichtung nach Anspruch 1 oder 2, dadurch gekennzeichnet, daß der Boden (11) als nach Art eines Förderbandes endloses, umlaufendes Band ausgebildet ist, wobei der obere Trum desselben als Boden (11) für die Kleintiere dient.

4.      Einrichtung nach Anspruch 3 sowie einem der weiteren Ansprüche, dadurch gekennzeichnet, daß eine Umlenkung (Umlenkwalze 20) für den als Band ausgebildeten Boden (11) unmittelbar am Rand des Querförderers (17) angeordnet ist.

5. Einrichtung nach einem der Ansprüche 1 bis 4, dadurch gekennzeichnet, daß der Boden (11) aus einer Mehrzahl paralleler, aneinander anschließender Bahnen (15a, 15b, 15c..) besteht.

6. Einrichtung nach einem der Ansprüche 1 bis 5, dadurch gekennzeichnet, daß der Boden (11) bzw. die Bahnen (15a, 15b) mit Ausnehmungen versehen, insbesondere gitterartig ausgebildet sind.

7. Einrichtung nach Anspruch 6 sowie einem der weiteren Ansprüche, dadurch gekennzeichnet, daß der Boden (11) bzw. dessen Bahnen (15a, 15b, 15c) aus einzelnen, Ausnehmungen (33) begrenzenden, vorzugsweise zugfesten Gliedern (29) bestehen, die schwenkbar gelagert oder elastisch verformbar sind.

8. Einrichtung nach Anspruch 7 sowie einem der weiteren Ansprüche, dadurch gekennzeichnet, daß die Glieder (29) durch Verbreiterungen an den Enden (Naben 31) etwa doppel-T-förmig ausgebildet sind und mit den verbreiterten Enden (Naben 31) verankert sind, insbesondere durch drehbare Lagerung der Naben (31) auf quer zur Förderrichtung verlaufenden Querstangen (30).

9. Einrichtung nach Anspruch 3 sowie einem der weiteren Ansprüche, dadurch gekennzeichnet, daß der untere Trum der Bahn (15a, 15b) lediglich aus in Abständen voneinander angeordneten Zugorganen, insbesondere aus zwei seitlich verlaufenden Zugseilen (38), besteht.

10. Einrichtung nach einem der Ansprüche 1 bis 9, dadurch gekennzeichnet, daß der Boden (11) bzw. dessen Bahnen (15a, 15b, 15c) seitlich in sich in Bewegungsrichtung erstreckenden Führungen (Führungsschienen 25, 26) bewegbar abgestützt sind, insbesondere durch Gleit- oder Rollkörper (Gleitkörper 34 bzw. Laufrollen 51).

UUU/32(

11.     Einrichtung nach Anspruch 10 sowie einem der weiteren Ansprüche, dadurch gekennzeichnet, daß bei der Ausbildung der Bahnen (15a, 15b..) mit Querstangen (30) diese mit Gleitkörpern (34) oder Laufrollen (51) in den Führungsschienen (25, 26) abgestützt sind.

12.     Einrichtung nach Anspruch 10 sowie einem der weiteren Ansprüche, dadurch gekennzeichnet, daß die Führungen (Führungsschienen 25, 26) Bestandteil von sich in Förderrichtung zwischen den Bahnen (15a, 15b..) erstreckenden Stützprofilen (23) sind, die auf höhenverstellbaren Stützen (22) gelagert sind.

13.     Einrichtung nach Anspruch 3 sowie einem der weiteren Ansprüche, dadurch gekennzeichnet, daß der als Förderband ausgebildete Boden (11) bzw. die Bahnen (15a, 15b..) über eine drehend angetriebene Umlenkwalze (20) geführt sind, die mit Erhöhungen und Vertiefungen (35, 36, 37) für den formschlüssigen Eingriff in den Boden (11) bzw. die Bahnen (15a, 15b) versehen ist.

14.     Einrichtung nach einem der Ansprüche 1 bis 13, dadurch gekennzeichnet, daß der Boden (11) auf der zur Abgabeseite (Querförderer 17) gegenüberliegenden Seite mit einer quer zur Bewegungsrichtung verlaufenden Fangvorrichtung (Fanggitter 39) versehen ist, welche mit dem Boden (11) bewegbar ist.

15.     Einrichtung nach einem der Ansprüche 1 bis 14, dadurch gekennzeichnet, daß am Ende der Förderstrecke des Bodens (11), insbesondere auf der gegenüberliegenden Seite des Querförderers (17), eine Gegenfangeinrichtung angeordnet ist, insbesondere eine Wand, z. B. eine Stallwand (48), durch die im Bereich eines schlitzförmigen Durchbruchs (47) der Boden (11) hindurchführbar ist.

000732C

16.     Einrichtung nach Anspruch 15, dadurch gekennzeichnet, daß der Durchbruch (47) für den Boden (11) eine geringere freie Höhe hat als die Größe der Tiere.

17.     Einrichtung nach einem oder mehreren der Ansprüche 1 bis 16, dadurch gekennzeichnet, daß der Boden (11) aus plattenförmigen Bodenelementen (40) besteht, die in Dichtlage aufeinanderfolgend angeordnet und gemeinsam in der Bodenebene bewegbar sowie aus der Stallung herausförderbar sind.

18.     Einrichtung nach Anspruch 17 sowie einem der weiteren Ansprüche, dadurch gekennzeichnet, daß die Bahnen (15a, 15b, 15c..) jeweils aus einer Reihe aufeinanderfolgend angeordneter Bodenelemente (40) bestehen, die je seitlich in Führungen (Führungsschienen 49, 50) bewegbar gelagert sind, insbesondere durch Laufrollen (51).

Fig. 1

Fig. 2

Fig. 3

# Fig. 4

0007320

517

## Fig.5

## Fig.6

Fig. 7

# Fig. 8

Europäisches Patentamt

EUROPÄISCHER RECHERCHENBERICHT

Nummer der Anmeldung

0007320

EP 78 10 0513

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 334 291 (SCHMIDT) <br> * Seite 2, Zeile 15 bis Seite 4, Zeile 17 * | 1-4,6, 9-11, 14 |
| | --- | |
| X | FR - A - 2 309 137 (CEREM) <br> * Seite 1, Zeile 16 bis Seite 3, Zeile 17 * | 1-2, 4-5. 9,14 |
| | --- | |
| X | FR - A - 2 201 032 (VEB GEFLUEGEL) <br> * Seite 4, Zeile 14 bis Seite 5, Zeile 21 * | 1,6, 10,17 |
| | --- | |
| X | GB - A - 638 770 (FORBES) <br> * Seite 2, Zeilen 79 bis 101; Seite 3, Zeilen 60 bis 110 * | 1-4 |
| | --- | |
| X | DE - A - 2 413 390 (TIEMANN) <br> * Seite 4, 2.Absatz bis Seite 6, 1.Absatz * | 1-4 |
| | --- | |
| X | FR - A - 2 227 821 (WIGRO) <br> * Seite 3, Zeile 18 bis Seite 4, Zeile 32 * | 1,17, 18 |
| | --- | |
| X | DE - A - 2 629 371 (DUERKOPP WERKE) <br> * Seiten 5 und 6 * | 1,6,10, 13,17, 18 |
| | --- | |
| | ./. | |

**KLASSIFIKATION DER ANMELDUNG (Int.Cl.²)**

A 01 K 31/22
B 65 G 17/08
A 01 K 45/00
E 04 H  5/08

**RECHERCHIERTE SACHGEBIETE (Int. Cl.²)**

A 01 K
B 65 G
E 04 H

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angeführtes Dokument
&: Mitglied der gleichen Patent- familie, übereinstimmendes Dokument

Der vorliegende Recherchenbericht wurde für alle Patentansprüche erstellt.

| Recherchenort <br> Den Haag | Abschlußdatum der Recherche <br> 29-03-1979 | Prüfer <br> CRUCHTEN |
|---|---|---|

EPA Form 1503.1  06.78

000732(

| Kategorie | Kennzeichnung des Dokuments mit Angabe, soweit erforderlich, der maßgeblichen Teile | betrifft Anspruch |
|---|---|---|
| | US - A - 3 739 904 (WINDSTRUP) <br> * Seite 1, Zusammenfassung * | 12 |
| | GB - A - 799 070 (CATTO) <br> * Seite 1, Zeilen 14 bis 19 * | 12 |
| | US - A - 4 058 021 (WOOD) <br> * Spalte 2, Zeile 11 bis Spalte 3, Zeile 59 * | 7-8,13 |
| | GB - A - 1 359 185 (UMEC-BOYDEL) <br> * Seite 2, Zeilen 6 bis 119 * | 7-8,11 |
| | DE - A - 2 344 975 (POERINK) <br> * Seiten 4 und 5 * | 7-8 |
| | DE - C - 163 161 (HUMBOLT) <br> * Seite 1, Zeile 44 bis Seite 2, Zeile 4 * | 11,13 |

**EINSCHLÄGIGE DOKUMENTE**

KLASSIFIKATION DER ANMELDUNG (Int.Cl.²)

RECHERCHIERTE SACHGEBIETE (Int. Cl.²)